# EUROPEAN PATENT SPECIFICATION

(11) **EP 4 327 985 B1**
(45) Date of publication and mention of the grant of the patent: **25.06.2025**
(21) Application number: 23193045.4
(22) Date of filing: 23.08.2023
(51) Int. Cl.: B25F 5/02

(54) **POWER TOOL INCLUDING A TOUCH SENSOR**
ELEKTROWERKZEUG MIT EINEM BERÜHRUNGSSENSOR
OUTIL ÉLECTRIQUE COMPRENANT UN CAPTEUR TACTILE

(30) Priority: 24.08.2022 US 202263400606 P; 31.01.2023 US 202363482359 P; 05.05.2023 US 202363500367 P
(43) Date of publication of application: 28.02.2024
(73) Proprietor: Milwaukee Electric Tool Corporation, Brookfield, WI 53005 (US)
(72) Inventor: ROPELLA, Dominick S, Wauwatosa, WI 53213 (US); EVANS, Zachary J, Waukesha, WI 53188 (US); HOWARTH, William Booth, Milwaukee, WI 53204 (US)
(74) Representative: Forresters IP LLP

(56) References cited:
- EP-A1- 3 495 899
- WO-A1-03/061913
- DE-A1- 102018 108 068
- GB-A- 2 598 736
- US-A1- 2009 000 128
- US-A1- 2010 018 609
- US-A1- 2013 162 188
- US-A1- 2014 231 113

## Description

### RELATED APPLICATIONS

This application claims the benefit of U.S. Provisional Patent Application No. 63/500,367, filed May 5, 2023, U.S. Provisional Patent Application No. 63/482,359, filed January 31, 2023, and U.S. Provisional Patent Application No. 63/400,606, filed August 24, 2022.

### FIELD

Embodiments described herein provide battery pack powered power tools.

US2014/231113 shows the preamble of claim 1 and describes a method for controlling an electric hand-held power tool having a device housing and a coupling device on the device housing side for securing an auxiliary handle to the device housing.

US2013/162188 describes a handheld machine tool with a drive motor and a supplementary handle.

DE102018108068 describes a driven machine tool with a drive unit and a housing with a first gripping section. The machine tool further comprises an additional handle with a second gripping section which can be detachably connected to the housing of the machine tool, and a safety device which is designed to control the drive unit.

GB2598736 describes a power tool such as an angle grinder comprises a motor having a shaft disposed within a housing, a gear case and a side handle. The gear case includes a mechanical lock-out member that is moveable from a default position where it prevents the rotor spindle from rotating, to an unlocked position when the ancillary handle is installed on the gear case, allowing the rotor spindle to turn.

EP3495899 describes a system includes a power tool and an automatic safety system communicatively coupled to the power tool.

US2009/000128 describes a portable electric power tool, having a metal housing, at least a region of which is covered with at least one plastic part. To cool that region of the metal housing which gets very warm due to the plastic cover, means are provided which produce air flow supplied from outside and sweeps over the metal housing in the region of the plastic part.

### SUMMARY

Embodiments described herein provide systems, methods, and devices related to the operation of a power tool, such as a grinder. In some embodiments, the power tool includes one or more impedance sensors that can be used to detect when a user is gripping one or more handles or surfaces of the power tool. The power tool must detect the presence of a user's hand on each of a first handle and a second handle of the power tool to permit operation of the power tool. In other embodiments, only one hand needs to be detected before the power tool is permitted to be operated. A controller of the power tool is configured to distinguish between a user's hand (i.e., a human hand) and another object (e.g., an inanimate object) based on output signals from the one or more impedance sensors. For example, the power tool 100 is more resistant to false activations from liquids (e.g., water), dirt, debris, etc.

Embodiments described herein provide a band saw including a housing and a motor located within the housing. The band saw includes a first handle and a second handle. The first handle includes a first trigger configured to be actuated by a user. A first hand of the user may be detected on the first handle based on actuation or de-actuation of the first trigger. The second handle includes a touch sensor (e.g., a capacitive touch sensor, an inductive touch sensor). The touch sensor is configured to detect a second hand of the user on the second handle. The band saw includes a controller operable to control operation of the motor and monitor for the actuation state of both the first trigger and the touch sensor. When the touch sensor is in an actuated state and is followed by the first trigger being in an actuated state, the controller drives the motor. When the first trigger is in an actuated state and is followed by the touch sensor being in an actuated state, the controller prohibits operation of the motor.

Power tools described herein include a housing, a motor situated within the housing, a first handle, a second handle, and a controller. The first handle includes a user input configured to be actuated by a first hand of a user. The second handle includes a touch sensor configured to detect a second hand of the user on the second handle. The controller is connected to the motor, the user input, and the touch sensor. The controller is configured to determine whether the user input is actuated, determine whether the second hand of the user is on the second handle, control, in response to both the user input being actuated and the second hand of the user being on the second handle, the motor to drive the motor, and prohibit, in response to the user input being actuated and the second hand of the user not being on the second handle, operation of the motor. The controller is further configured to determine whether the user input is actuated after determining whether the second hand of the user is on the second handle and prohibit, in response to the user input being actuated before the second hand of the user is on the second handle, operation of the motor.

In some aspects, the touch sensor is an impedance sensor including a surface, a transmitter configured to provide a load sine wave to the surface, and a receiver configured to receive a current response of the load sine wave.

In some aspects, the controller is configured to determine whether the second hand of the user is on the second handle based on a change in the current response of the load sine wave.

In some aspects, the surface is curved to interface with the second handle.

In some aspects, the touch sensor is a capacitive sensor.

In some aspects, the controller is further configured to enter, in response to the user input not being actuated and the second hand of the user not being on the second handle, a sleep mode.

In some aspects, a first portion of the housing is composed of a metallic material, and the first portion is configured as a heat sink.

Methods described herein include determining, with a controller, whether a user input is actuated, the user input associated with a first handle, and determining, with the controller and based on a signal from a touch sensor integrated in a second handle, whether a hand of a user is on the second handle. The method includes controlling, with the controller and in response to both the user input being actuated and the hand of the user being on the second handle, a motor to drive the motor. The method includes prohibiting, with the controller and in response to the user input being actuated and the second hand of the user not being on the second handle, operation of the motor. The method includes determining, with the controller, whether the user input is actuated after determining whether the hand of the user is on the second handle, and prohibiting, with the controller and in response to the user input being actuated before the hand of the user is on the second handle, operation of the motor.

In some aspects, the method includes providing, with a transmitter of the touch sensor, a load since wave to a metal plate, and receiving, with a receiver of the touch sensor, a current response of the load sine wave.

In some aspects, the method includes determining, with the controller, whether the hand of the user is on the second handle based on a change in the current response of the load sine wave.

In some aspects, the method includes entering, with the controller and in response to the user input not being actuated and the hand of the user not being on the second handle, a sleep mode.

Power tools described herein include a housing, a motor situated within the housing, a first handle, a second handle, an indicator, and a controller. The first handle includes a user input configured to be actuated by a first hand of a user. The second handle includes a touch sensor configured to detect a second hand of the user on the second handle. The indicator is configured to provide an output. The controller is connected to the motor, the indicator, the user input, and the touch sensor. The controller is configured to determine whether the user input is actuated, determine whether the second hand of the user is on the second handle, and drive, in response to both the user input being actuated and the second hand of the user being on the second handle, the motor. The controller, in response to the user input being actuated and the second hand of the user not being on the second handle, is configured to prohibit operation of the motor and control the indicator to provide the output.

In some aspects, the controller is configured to determine, after determining that the user input is operated, that the second hand of the user is on the second handle, and continue, in response to the second hand of the user being on the second handle after determining that the user input is operated, prohibiting operation of the motor.

In some aspects, the controller is configured to determine, after prohibiting operation of the motor, whether the user input is actuated, and disable, in response to the user input not being actuated and the second hand of the user not being on the second handle, the indicator.

In some aspects, the touch sensor is an impedance sensor including a surface, a transmitter configured to provide a load sine wave to the surface, and a receiver configured to receive a current response of the load sine wave.

In some aspects, the controller is configured to determine whether the second hand of the user is on the second handle based on a change in the current response of the load sine wave.

In some aspects, the surface is curved to interface with the second handle.

In some aspects, a first portion of the housing is composed of a metallic material, and the first portion is configured as a heat sink.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIGS. 1A, 1B, 1C illustrate a power tool, according to some embodiments.
FIG. 2 illustrates a side section view of the power tool of FIG. 1A, according to some embodiments.
FIG. 3 illustrates a controller for the power tool of FIGS. 1A-1C, according to some embodiments.
FIG. 4A illustrates a perspective view of a power tool, according to some embodiments.
FIG. 4B illustrates a perspective view of a power tool, according to some embodiments.
FIG. 4C illustrates a cross section of the power tool of FIG. 4A, according to some embodiments.
FIG. 5 illustrates a secondary handle of the power tool of FIG. 4A, according to some embodiments.
FIG. 6 illustrates a housing portion of the power tool of FIG. 4A configured as a heat sink, according to some embodiments.
FIG. 7 illustrates a controller for the power tool of FIG. 4A, according to some embodiments.
FIG. 8 illustrates an impedance sensor for a power tool, according to some embodiments.
FIG. 9 illustrates a relationship between resistance and reactance for the impedance sensor of FIG. 8, according to some embodiments.
FIG. 10 illustrates a surface of the impedance sensor of FIG. 8, according to some embodiments.
FIG. 11 illustrates a method performed by the controller of FIG. 3 or FIG. 7, according to some embodiments.
FIG. 12 illustrates another method performed by the controller of FIG. 3 or FIG. 7, according to some embodiments.
FIG. 13 illustrates a state diagram for the controller of FIG. 3 or FIG. 7, according to some embodiments.
FIG. 14 illustrates another method performed by the controller of FIG. 3 or FIG. 7, according to some embodiments.

### DETAILED DESCRIPTION

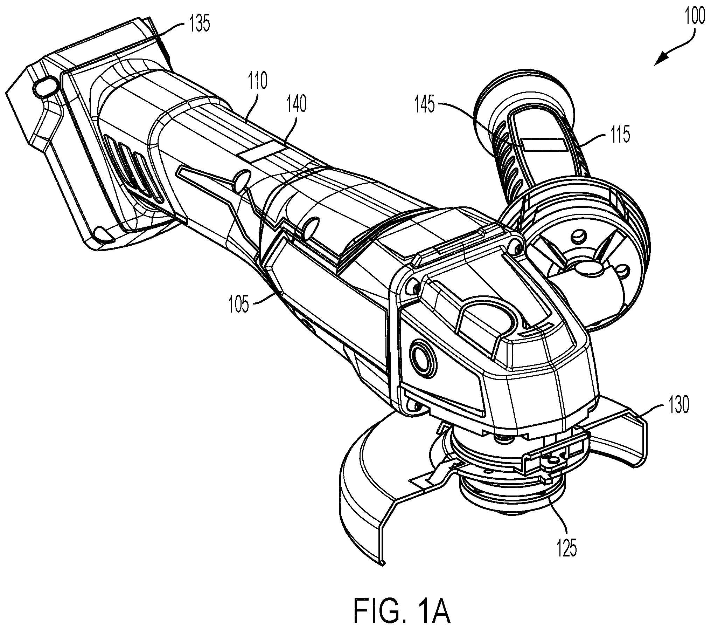

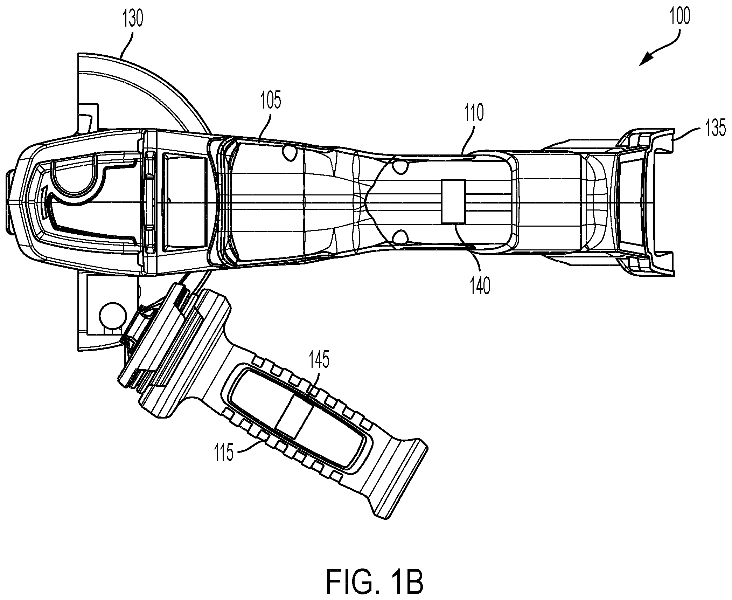

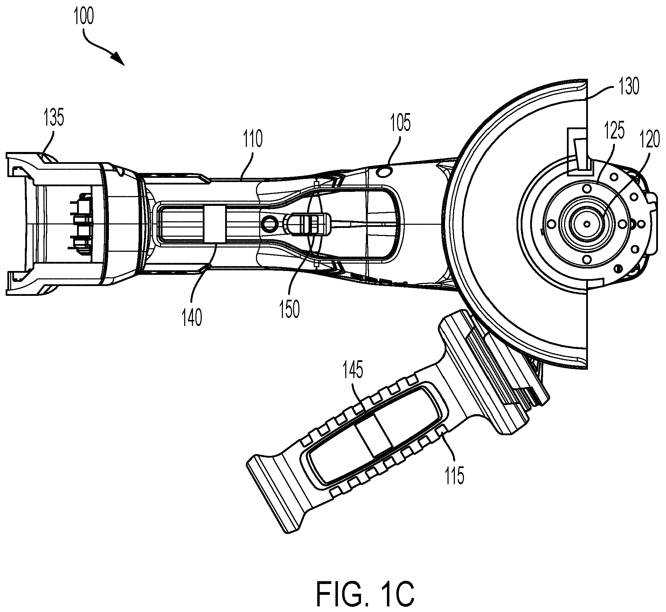

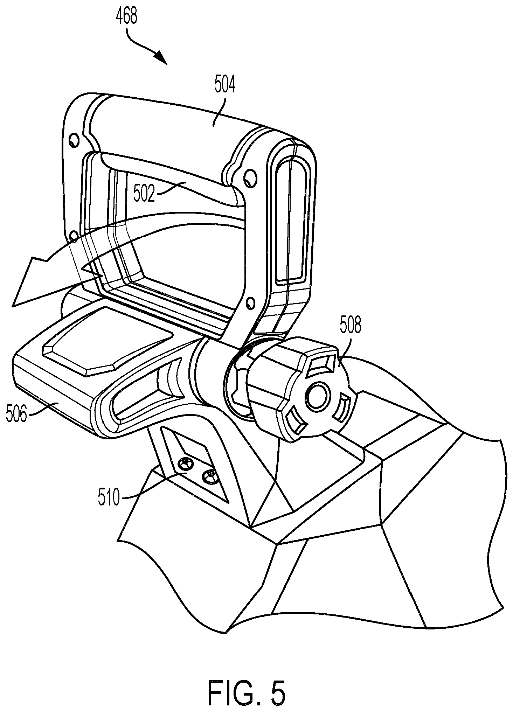

FIGS. 1A, 1B, and 1C illustrate a power tool 100. In some embodiments, the power tool 100 is a grinder. Although a grinder is illustrated, the power tool 100 can be a variety of other types of power tools, such as drilling power tools, fastening power tools, sawing power tools, cutting power tools, power tool battery packs, power supplies, lighting devices, etc. For example, the power tools can include motorized power tools (e.g., a drill, an impact driver, an impact wrench 105, a rotary hammer, a hammer drill, a saw [e.g., a circular saw, a cut-off saw 100, a reciprocating saw, a miter saw, a table saw 120, etc.], a core drill 130, a breaker 115, a demolition hammer, a compressor 110, a pump, etc.), outdoor tools (e.g., a chain saw 125, a string hammer, a hedge trimmer, a blower, a lawn mower, etc.), drain cleaning and plumbing tools, construction tools, concrete tools, other motorized devices (e.g., vehicles, utility carts, wheeled and/or self-propelled tools, etc.), etc., non-motorized electrical devices (e.g., a power supply 145, a light 135, a battery pack charger 140, a generator, etc.), and an adapter that is configured to be positioned between a power tool and a battery pack, such as adapter 530 (see FIG. 5).

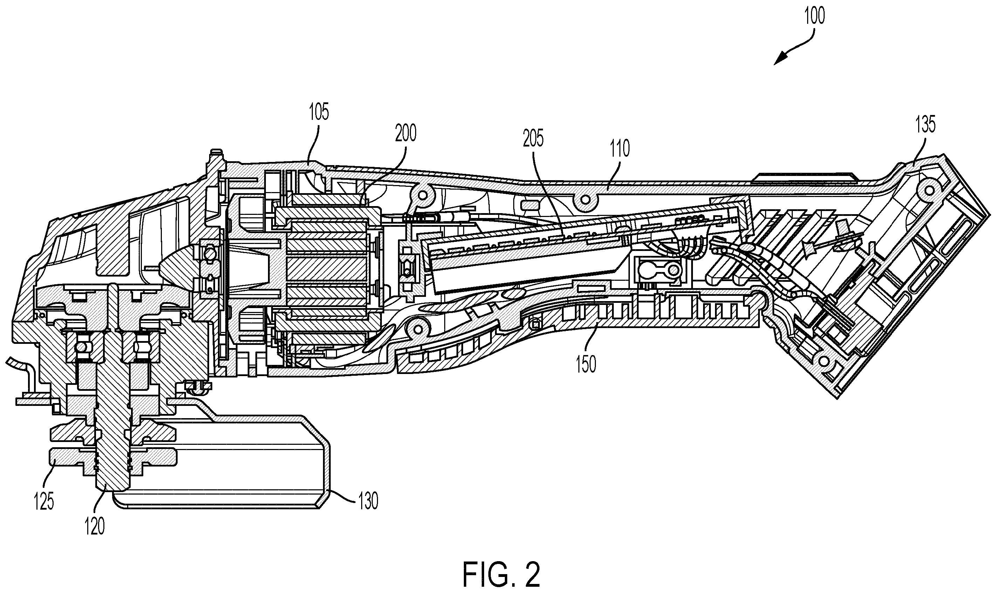

The power tool 100 includes a main tool housing 105, a first handle 110 that extends along the main tool housing 105, and a second handle 115 that extends transversely in an outward direction from the main tool housing 105. A motor 200 (see FIG. 2) is located within the main tool housing 105. An output shaft 120 is coupleable to a tool holder 125 that may be configured to receive an accessory, such as a cutting tool, a grinding disc, a rotary burr, a sanding disc, etc. Various types of accessories may be interchangeably attached to the tool holder 125 and may be designed with different characteristics to perform different types of operations. For example, the accessory may be made of a material and have dimensions suitable for performing a specific type of task. The characteristics of an accessory may affect the performance of the power tool 100 or may impose constraints on operation of the power tool. For example, different accessory types may be configured to work at different rotational speeds or applied torques depending on the characteristics of the accessory and the task to be performed. During operation of the power tool 100, the motor 200 and the output shaft 120 may be controlled to rotate at a wide range of speeds.

Due to the wide range of speeds, in some embodiments, the power tool 100 may include a guard 130 to protect a user or another object in the surrounding environment from the different accessory types that may be attached to the tool holder 125. In some embodiments, the guard 130 prevents a user from contacting the accessory. In some embodiments, the guard 130 provides protection against, for example, sparks.

In some embodiments, the first handle 110 may include or define a battery pack receptacle 135, which is positioned on an end of the first handle 110 opposite the main tool housing 105. The battery pack receptacle 135 is configured to selectively, mechanically and electrically connect to a rechargeable battery pack (i.e., a power supply) for powering the motor 200. The battery pack is insertable into or attachable to the battery pack receptacle 135. The battery pack may include any of a number of different nominal voltages (e.g., 12V, 18V, 24V, 36V,40V, 48V, 72V, etc.), and may be configured having any of a number of different chemistries (e.g., lithium-ion, nickel-cadmium, etc.). In some embodiments, the motor 200 may be powered by a remote power source (e.g., an AC electrical outlet) through a power cord and a power interface of the power tool 100. The first handle 110 further includes control electronics for the power tool 100.

The second handle 115 may allow a user to better control the operation of the power tool 100. The first handle 110 and/or the second handle 115 include one or more sensors to detect different operational characteristics and/or user characteristics (e.g., operator presence, grip pressure, etc.). For example, the first handle 110 includes a first sensor 140 for detecting the presence of a user's hand on the first handle 110, and the second handle 115 includes a second sensor 145 for detecting the presence of a user's second hand on the second handle 115. In some embodiments, the sensors 140, 145 are impedance sensors that detect the presence of a user's hand on the handles 110, 115. In other embodiments, the sensors 140, 145 are capacitive sensors that detect the presence of a user's hand on the handles 110, 115. Signals from the sensors 140, 145 are provided to the power tool 100's main control system, and the operation of the motor 200 may be controlled based on the signals (e.g., enabling or disabling the motor 200, modifying a torque limit, modifying a speed limit, etc.).

As illustrated in FIG. 1C, the power tool 100 also includes an input device or user input 150 (e.g., a button, a switch, a lever, a trigger, etc.) for controlling the power tool 100. As also illustrated in FIG. 1C, the grinder can include additional sensors 140, 145 on an under or bottom side of the first handle 110 and/or the second handle 115. In some embodiments, the sensors 140, 145 shown in FIG. 1C replace the sensors 140, 145 shown in FIGS. 1A and 1B. In other embodiments, sensors 140, and 145 are provided on both the upper or top side (FIGS. 1A and 1B) and the under or bottom side (FIG. 1C).

Although the sensors 140, 145 are illustrated only with respect to the first handle 110 and the second handle 115, the sensors 140, 145 can also be located at different locations on the power tool 100 (e.g., the main tool housing 105).

FIG. 2 illustrates a side section view of the power tool 100. In some embodiments, a control printed circuit board 205 is located within the first handle 110. In some embodiments, the sensors 140, 145 are located within the first handle 110 itself or within a space defined by the first handle 110. The output shaft 120 protrudes downwards away from the housing 105, towards a potential workpiece. In some embodiments, an accessory (e.g., a grinder blade) may be attached to the output shaft 120. Because an accessory, such as a grinder blade, is potentially hazardous to the user and the area surrounding the grinder, the guard 130 is also attached to the power tool 100 and protrudes downward toward a workpiece, and extends around a grinder blade. This provides protection from the blade and any potential debris that is produced during operation. In some embodiments, the motor 200 is located between the output shaft 120 and the battery pack receptacle 135.

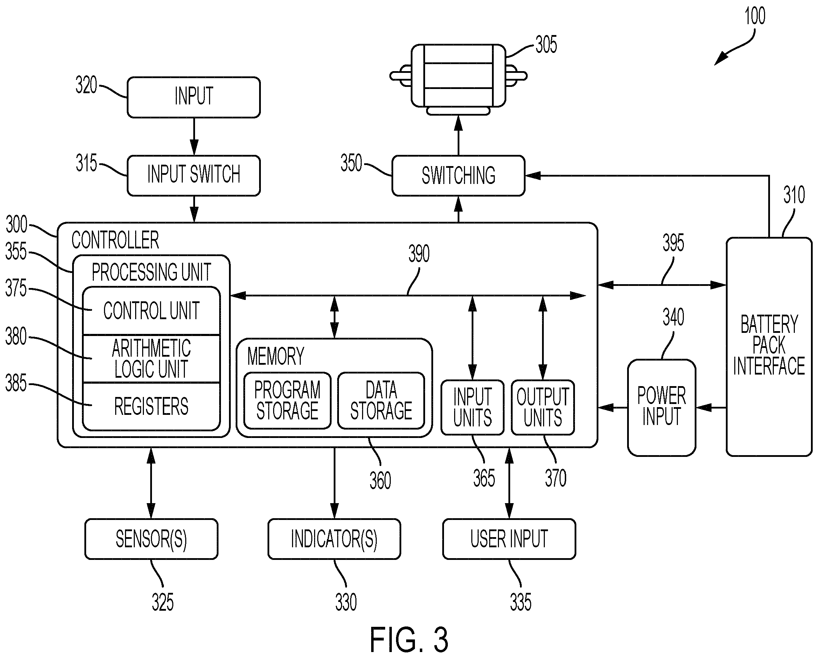

FIG. 3 illustrates a control system for the power tool 100. The control system includes a controller 300. The controller 300 is electrically and/or communicatively connected to a variety of modules or components of the power tool 100. For example, the illustrated controller 300 is electrically connected to the motor 200, a battery pack interface 310 (e.g., battery pack receptacle 135), an input switch 315 (connected to an input 320 [e.g., input device 150]), one or more sensors or sensing circuits 325 (e.g., the sensors 140, 145), one or more indicators 330, a user input module 335, a power input module 340, and a switching module 350 (e.g., including a plurality of switching FETs). The controller 300 includes combinations of hardware and software that are operable to, among other things, control the operation of the power tool 100, monitor the operation of the power tool 100, activate the one or more indicators 330 (e.g., an LED), etc.

The controller 300 includes a plurality of electrical and electronic components that provide power, operational control, and protection to the components and modules within the controller 300 and/or the power tool 100. For example, the controller 300 includes, among other things, a processing unit 355 (e.g., a microprocessor, a microcontroller, an electronic processor, an electronic controller, or another suitable programmable device), a memory 360, input units 365, and output units 370. The processing unit 355 includes, among other things, a control unit 375, an arithmetic logic unit ("ALU") 380, and a plurality of registers 385, and is implemented using a known computer architecture (e.g., a modified Harvard architecture, a von Neumann architecture, etc.). The processing unit 355, the memory 360, the input units 365, and the output units 370, as well as the various modules or circuits connected to the controller 300 are connected by one or more control and/or data buses (e.g., common bus 390). The use of one or more control and/or data buses for the interconnection between and communication among the various modules, circuits, and components would be known to a person skilled in the art in view of the invention described herein.

The memory 360 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 355 is connected to the memory 360 and executes software instructions that are capable of being stored in a RAM of the memory 360 (e.g., during execution), a ROM of the memory 360 (e.g., on a generally permanent basis), or another non-transitory computer readable medium such as another memory or a disc. Software included in the implementation of the power tool 100 can be stored in the memory 360 of the controller 300. The software includes, for example, firmware, one or more applications, program data, filters, rules, one or more program modules, and other executable instructions. The controller 300 is configured to retrieve from the memory 360 and execute, among other things, instructions related to the control processes and methods described herein. In other constructions, the controller 300 includes additional, fewer, or different components.

The motor 200 includes a rotor and a stator that surrounds the rotor, or a stator and a rotor that surrounds the stator. In some embodiments, the motor 200 is a brushless direct current ("BLDC") motor in which the rotor is a permanent magnet rotor, and the stator includes coil windings that are selectively energized to drive the rotor. In other embodiments, the motor is a brushed motor. The stator is supported within the main tool housing 105 and remains stationary relative to the main tool housing 105 during operation of the power tool 100. The rotor is rotatably fixed to a rotor shaft and configured to rotate with the rotor shaft, relative to the stator, about a motor axis. A portion of the rotor shaft is associated with or corresponds to the output shaft 120 extending from the main tool housing 105.

The battery pack interface 310 includes a combination of mechanical components (e.g., rails, grooves, latches, etc.) and electrical components (e.g., one or more terminals) configured to and operable for interfacing (e.g., mechanically, electrically, and communicatively connecting) the power tool 100 with a battery pack. For example, power provided by the battery pack to the power tool 100 is provided through the battery pack interface 310 to the power input module 340. The power input module 340 includes combinations of active and passive components to regulate or control the power received from the battery pack prior to power being provided to the controller 300. The battery pack interface 310 also supplies power to the switching module 350 to provide power to the motor 305. The battery pack interface 310 also includes, for example, a communication line 395 for providing a communication line or link between the controller 300 and the battery pack.

The indicators 330 include, for example, one or more light-emitting diodes ("LEDs"). The indicators 330 can be configured to display conditions of, or information associated with, the power tool 100. For example, the indicators 330 are configured to indicate measured electrical characteristics of the power tool 100, the status of the power tool 100, etc. The user input module 335 is operably coupled to the controller 300 to, for example, select a forward mode of operation or a reverse mode of operation, a torque and/or speed setting for the power tool 100 (e.g., using torque and/or speed switches), etc. In some embodiments, the user input module 335 includes a combination of digital and analog input or output devices required to achieve a desired level of operation for the power tool 100, such as one or more knobs, one or more dials, one or more switches, one or more buttons, etc.

The controller 300 is configured to determine whether a fault condition of the power tool 100 is present and generate one or more control signals related to the fault condition. For example, the sensing circuits 325 include one or more current sensors, one or more speed sensors, one or more Hall Effect sensors, one or more temperature sensors, an accelerometer, a gyroscope, an inertial measurement unit ["IMU"], one or more pressure sensors, one or more object presence sensors, one or more impedance sensors, one or more touch sensors (e.g., capacitive sensors), etc. The controller 300 calculates or includes, within memory 360, predetermined operational threshold values and limits for operation of the power tool 100. For example, when a potential thermal failure (e.g., of a FET, the motor 305, etc.) is detected or predicted by the controller 300, power to the motor 305 can be limited or interrupted until the potential for thermal failure is reduced. If the controller 300 detects one or more such fault conditions of the power tool 100 or determines that a fault condition of the power tool 100 no longer exists, the controller 300 is configured to provide information and/or control signals to another component of the power tool 100 (e.g. the battery pack interface 310, the indicators 330, etc.).

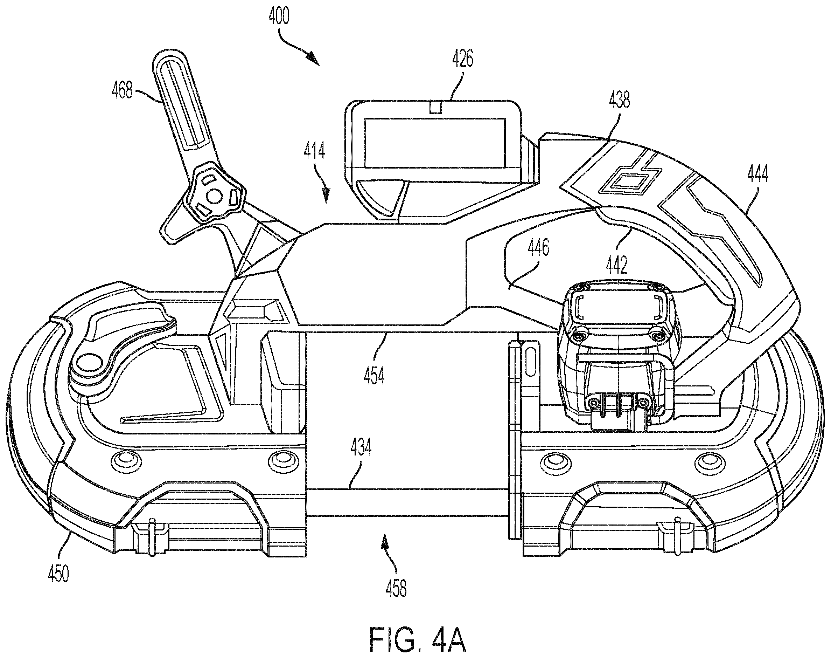

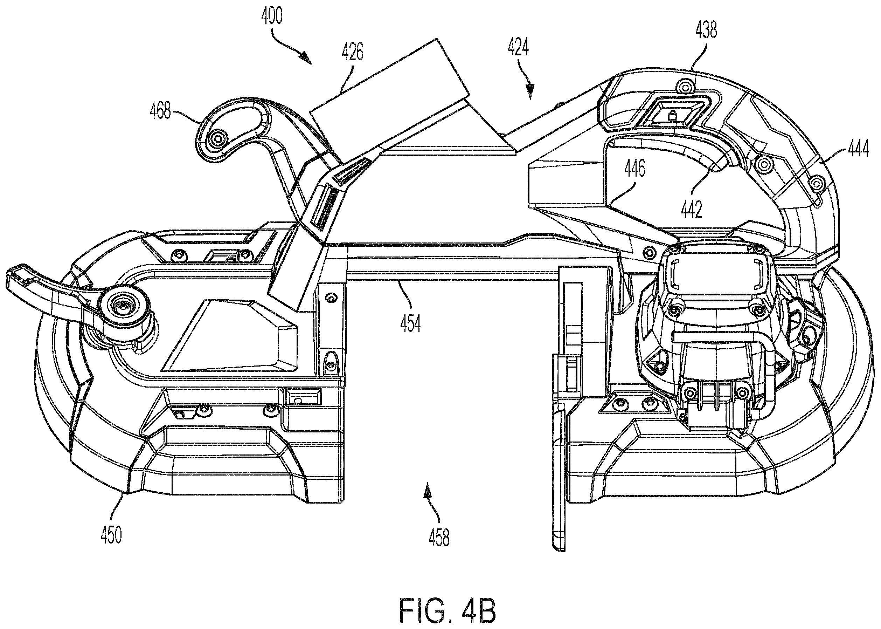

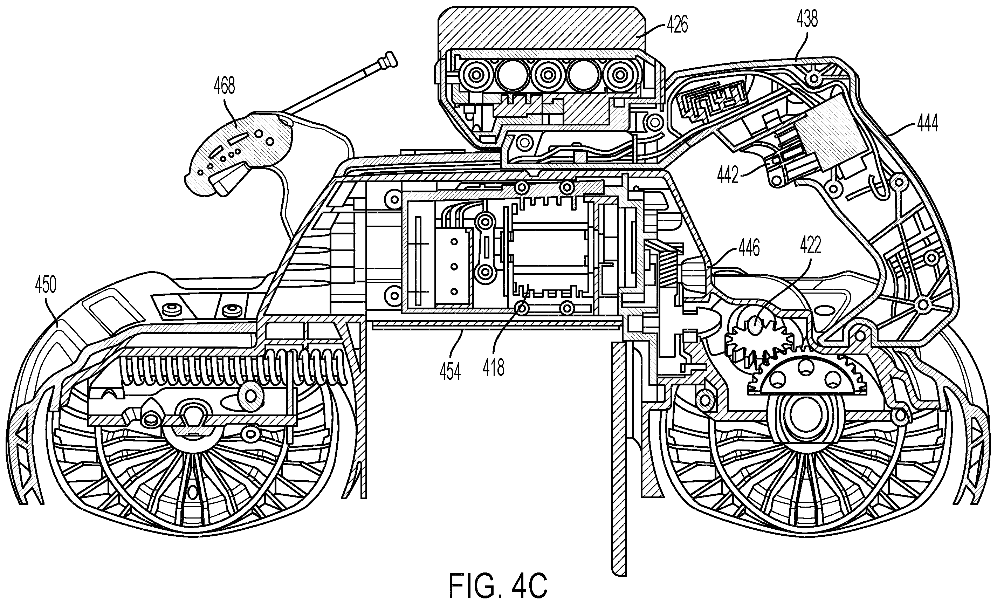

FIGS. 4A-4C illustrate a power tool 400 (e.g., a band saw) including a frame or housing 414 supporting a motor 418 and a gear box 422 (see FIG. 4C). In the illustrated example of the power tool 400, the motor 418 is configured as a DC brushless motor, and the power tool 400 is configured to receive a removable and rechargeable battery pack 426 for supplying power to the power tool 400. FIGS. 4A and FIGS. 4B provide different example locations of the battery pack 426 connected to the power tool 400. The motor 418 is drivingly connected to a drive assembly through a gear box 422. The motor 418, the drive assembly, and the gear box 422 are supported by the housing 414. The drive assembly may include any of a number of bearing arrangements and different gear train arrangements configured to provide various speed and torque outputs. The motor 418 and the drive assembly are operable to drive a continuous band saw blade 434 to cut a workpiece.

The housing 414 includes a primary handle 438 with a primary switch or primary trigger 442 to provide power to the power tool 400. The primary trigger 442 is disposed adjacent a gripping portion 444 of the primary handle 438 where a user grasps the power tool 400. In the example of FIG. 4A, the battery pack 426 is supported by the primary handle 438 and is an 18-volt power tool battery pack 426. In other embodiments, such as that shown in the example of FIG. 4B, the battery pack 426 may be supported on the housing 414. The primary trigger 442 is operable to control operation of the motor 418. Specifically, the battery pack 426 selectively supplies power to the motor 418 based on an actuation of the primary trigger 442.

The housing 414 of the power tool 400 also includes a deck 446 and a guard 450 coupled to the deck 446. A combination of the deck 446 and the guard 450 defines an opening or cavity 454 (e.g., a U-shaped cavity). The guard 450 includes a lip (not shown) that provides a recessed area in which the band saw blade 434 is positioned. The guard 450 substantially covers the band saw blade 434 when the blade 434 is in a shielded position (i.e., when the blade 434 is outside of a cut zone 458). The cavity 454 enables the band saw blade 434 to be in an exposed position (i.e., when the blade 434 passes through the cut zone 458). In the exposed position, the blade 434 is fully exposed and unobstructed by the guard 450, allowing workpieces to be cut when entering the cut zone 458.

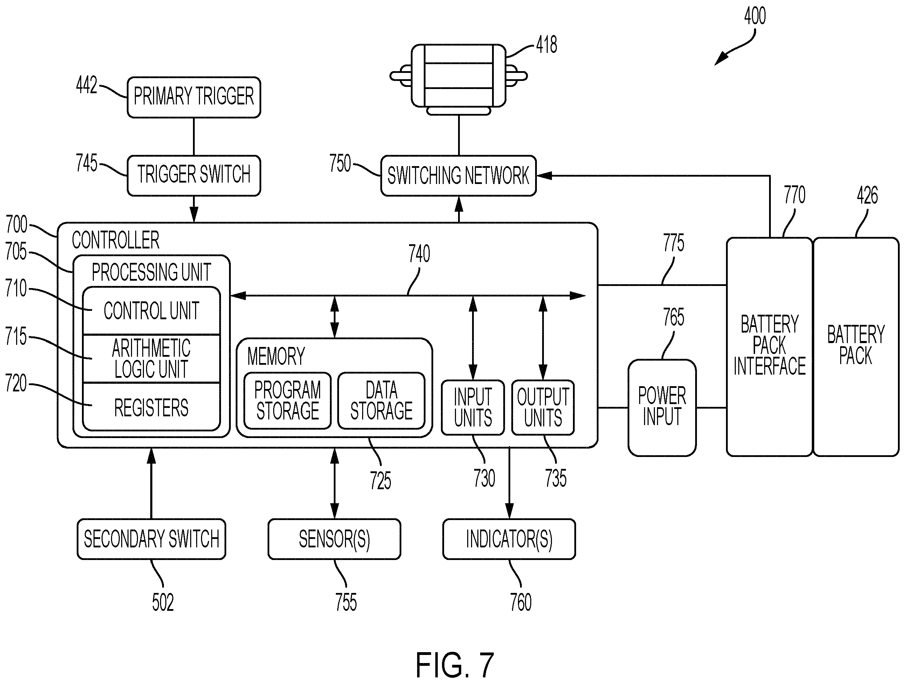

The power tool 400 also includes a secondary handle 468 with a secondary trigger or secondary switch 502, shown in detail in FIG. 5. The secondary switch 502 is adjacent to a secondary gripping portion 504. The secondary switch 502 may be, for example, a touch sensor configured to detect whether a user is gripping the secondary handle 468, as described below in more detail. In some embodiments, the secondary switch 502 is an inductive sensor. In other embodiments, the secondary switch 502 is a capacitive sensor. The capacitive sensor may include a sensing probe formed of unshielded wire routed from the controller 700 (see FIG. 7) and coiled in the secondary handle 468 to detect the presence of an operator's hand. In some instances, the power tool 400 includes a reference capacitance (e.g., mounted on a printed circuit board) that can be used to mitigate or eliminate measurement drift due to common-mode environmental factors. In some instances, the capacitive sensor may also include a reference probe formed of a shielded copper pour configured to detect capacitance levels due to environmental conditions. In some embodiments, two or more capacitive sensors are integrated in the secondary handle 468 to detect an operator's hand.

In some instances, the secondary handle 468 includes a projection 506 configured to support a workpiece to be cut by the power tool 400. The secondary handle 468 may include an adjusting knob 508 configured such that rotation of the adjusting knob adjusts a position of the secondary handle 468, the projection 506, or a combination thereof. In some embodiments, the secondary handle 468 is removably connected to the housing 414 via one or more fasteners 510 (e.g., screws). In some embodiments, as shown in FIGS. 4A and 4B, the secondary handle 468 is configured as a D-handle. In other embodiments, the secondary handle 468 may be configured as a pommel, as shown in FIG. 4C.

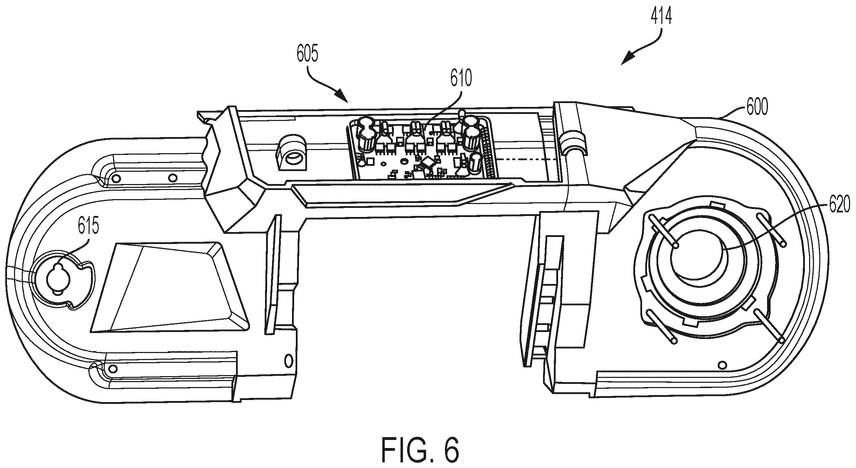

FIG. 6 illustrates a housing portion 600 of the housing 414 of the power tool 400. In the illustrated embodiment, the housing portion 600 of the housing 414 is made of a metallic material. In some embodiments, the housing portion 600 of the housing 414 is referred to as a deck of the power tool 400. The housing portion 600 is configured to function as a heat sink for the power tool 400. As such, an external portion of the housing 414 is configured as a heatsink (e.g., rather than having a heatsink positioned within the housing 414). Because the performance of a heatsink is a function of the thermal mass and surface area of the heatsink, forming an external portion of the housing 414 into a heatsink increases both the thermal mass of the heatsink and the surface area available to dissipate generated heat. The increased thermal mass and surface area of the housing portion 600 acting as a heat sink increases the heatsinking performance of the power tool 400. Using an external portion of the housing 414 as a heatsink also functions to reduce overall material cost, size, and weight of the power tool 400.

The housing portion 600 can include a recessed portion 605 configured to receive a printed circuit board ("PCB") 610. In some embodiments, a thermally conductive pad can be placed between the housing portion 600 and the PCB 610. In some embodiments, the PCB 610 can be potted into the recessed portion 605 using a potting compound to improve ingress protection (e.g., water intrusion). In some embodiments, the housing portion 600 is machined. For example, mounting holes 615, 620 can be machined into the housing portion 600 for assembling the power tool 400. In some embodiments, one or more threaded mounting holes can be machined into the housing portion 600 for securing the PCB 610 to the housing portion 600 and/or for assembling the power tool 400. In some embodiments, the housing portion 600 is first cast and then machined in a fashion similar to that described above.

FIG. 7 illustrates a controller 700 for the power tool 400. The controller 700 is electrically and/or communicatively connected to a variety of modules or component of the power tool 400. For example, the illustrated controller 700 is connected to indicators 760, sensors 755 (which may include, for example, a pressure sensor, a speed sensor, a current sensor, a voltage sensor, a position sensor, etc.), the primary trigger 442, a trigger switch 745, a switching network 750, a power input unit 765, the motor418, and the secondary switch 502. In some embodiments, the sensors 755 include one or more capacitive sensors and/or one or more impedance sensors (e.g., an impedance sensing integrated circuit). A capacitance sensor or an impedance sensor can be used to detect, for example, a type of material that the power tool 400 is cutting, an accessory (e.g., a blade, a handle, etc.) connected to the power tool 400, etc. Such sensors would not require direct contact with rotating portions of the power tool 400 to detect the type of material being cut, the attached accessory, etc. In some embodiments, the secondary switch 502 can be implemented using an impedance sensor. In some embodiments, the material being cut can have its own distinct electrical characteristics (e.g., capacitance, impedance, etc.). As a result, the material being cut can affect a capacitance or impedance of an accessory being used to make the cut (e.g., a saw blade). Such variations or changes in capacitance or impedance can be used to identify the material that is being cut. For example, cutting a wooden material will have one effect on capacitance or impedance of the accessory, and human flesh will have a different effect on capacitance or impedance of the accessory. Depending on the detected type of material, the power tool 400 can be controlled accordingly (e.g., shut down).

The controller 700 includes a plurality of electrical and electronic components that provide power, operational control, and protection to the components and modules within the controller 700 and/or power tool 400. For example, the controller 700 includes, among other things, a processing unit 705 (e.g., a microprocessor, an electronic processor, an electronic controller, a microcontroller, or another suitable programmable device), a memory 725, input units 730, and output units 735. The processing unit 705 includes, among other things, a control unit 710, an arithmetic logic unit ("ALU") 715, and a plurality of registers 720 (shown as a group of registers in FIG. 7), and is implemented using a known computer architecture (e.g., a modified Harvard architecture, a von Neumann architecture, etc.). The processing unit 705, the memory 725, the input units 730, and the output units 735, as well as the various modules or circuits connected to the controller 700 are connected by one or more control and/or data buses (e.g., common bus 740). The control and/or data buses are shown generally in FIG. 7 for illustrative purposes. The use of one or more control and/or data buses for the interconnection between and communication among the various modules and components would be known to a person skilled in the art in view of the embodiments described herein.

The memory 725 is a non-transitory computer readable medium and includes, for example, a program storage area and data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 705 is connected to the memory 725 and executes software instruction that are capable of being stored in a RAM of the memory 725 (e.g., during execution), a ROM of the memory 725 (e.g., on a generally permanent basis), or another non-transitory computer readable medium such as another memory or a disc. Software included in the implementation of the power tool 400 can be stored in the memory 725 of the controller 700. The software includes, for example, firmware, one or more applications, program data, filters, rules, one or more program modules, and other executable instructions. The controller 700 is configured to retrieve from the memory 725 and execute, among other things, instructions related to the control processes and methods described herein. In other embodiments, the controller 700 includes additional, fewer, or different components.

A battery pack interface 770 is connected to the controller 700 and couples to the battery pack 426. The battery pack interface 770 includes a combination of mechanical (e.g., a battery pack receiving portion) and electrical components configured to and operable for interfacing (e.g., mechanically, electrically, and communicatively connecting) the power tool 400 with the battery pack 426. The battery pack interface 770 is coupled to power input unit 765. The battery pack interface 770 transmits the power received from the battery pack 426 to the power input unit 765. The power input unit 765 includes active and/or passive components (e.g., voltage step-down controllers, voltage converters, rectifiers, filters, etc.) to regulate or control the power received through the battery pack interface 770 and to controller 700.

The controller 700 is configured to drive the motor 418 in response to a user's actuation of the primary trigger 442 (e.g., when operation of the motor 418 is permitted). For example, depression of the primary trigger 442 actuates or activates a trigger switch 745, which outputs a signal to the controller 700 to drive the motor 418, and therefore the blade 434. In some embodiments, the controller 700 is configured to control the switching network 750 (e.g., a FET switching bridge) to drive the motor 418. For example, the switching network 750 may include a plurality of high side switching elements (e.g., FETs) and a plurality of low side switching elements (e.g., FETs). The controller 700 may control each of the plurality of high side switching elements and the plurality of low side switching elements to drive each phase of the motor 418. For example, the power switching network 750 may also be controlled to more quickly deaccelerate or brake the motor 418.

The indicators 760 are also coupled to the controller 700 and receive control signals from the controller 700 to turn on and off or otherwise convey information based on different states of the power tool 400. The indicators 760 include, for example, one or more light-emitting diodes (LEDs), or a display screen. The indicators 760 can be configured to display conditions of, or information associated with, the power tool 400. For example, the indicators 760 can display information relating to whether operation of the power tool 400 is permitted based on signals from the secondary switch 502. In addition to or in place of visual indicators, the indicators 760 may also include a speaker or a tactile feedback mechanism to convey information to a user through audible or tactile outputs.

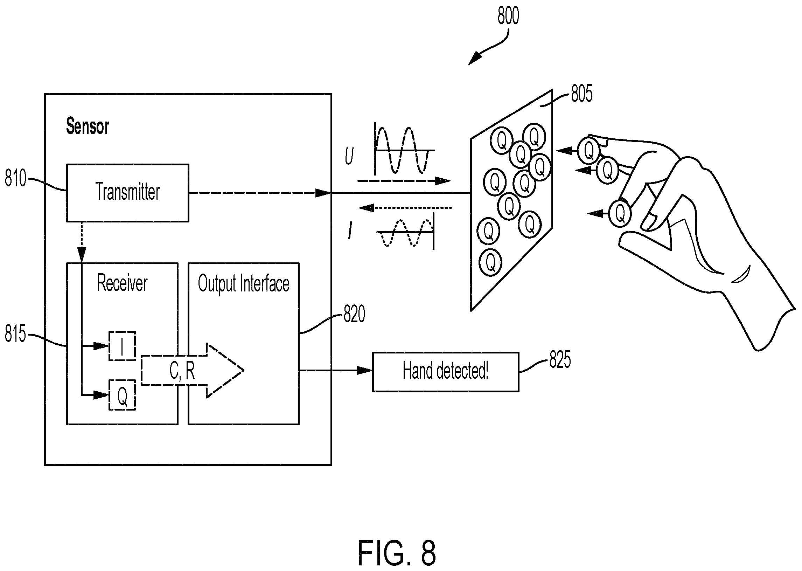

FIG. 8 illustrates a sensor 800 included in the sensors 325 of the power tool 100, or sensors 755 of the power tool 400. The sensor 800 is, for example, an impedance sensor 800. The impedance sensor 800 includes a surface 805 that can be contacted by a user or an object external to the power tool 100, 400. The impedance sensor 800 also includes a transmitter 810, a receiver 815, an output interface 820, and produces an output signal 825 that is received by the controller 300, 700. The output signal 825 can, for example, provide an indication or whether a user's hand has been detected. In some embodiments, the output signal 825 is provided to the controller 300, 700 and the controller 300, 700 is configured to determine whether a user's hand has been detected.

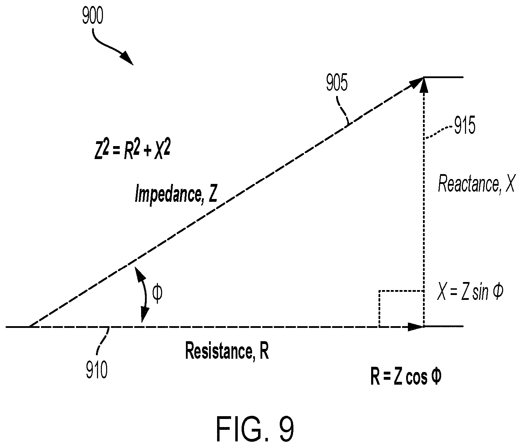

The transmitter 810 provides a current (e.g., a load sine wave) to the surface 805. The receiver 815 receives a current response of the load. A change in the current (e.g., in phase and modulus) can be sensed. The current response is converted to a voltage 900 and then demodulated into an in-phase component and a quadrature component, as shown in FIG. 9. With reference to FIG. 9, a sensed or detected impedance 905 includes the in-phase component and the quadrature component. The in-phase component corresponds to a resistive component 910 of the detected impedance 905. The quadrature component corresponds to a reactive component 915 of the detected impedance 905. In some embodiments, the frequency of the sine wave from the transmitter 810 is between 30 kilo-Hertz ("kHz") and 150 kHz. Based on the changes in the resistive and reactive components of the detected impedance 905, when implemented in the power tool 100, the controller 300 is configured to determine whether a user is gripping, for example, the first handle 110 and/or the second handle 115. When implemented in the power tool 400, the controller 700 is configured to determine whether a user is gripping the primary trigger 442 and/or the secondary switch 502 based on the changes in the resistive and reactive components of the detected impedance 905. In some embodiments, the power tool 100, 400 is configured to distinguish between, for example, a human hand gripping the power tool 100, 400 and an inanimate object that may be contacting the power tool 100, 400.

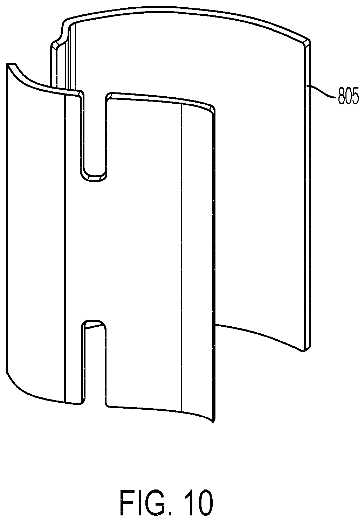

FIG. 10 illustrates an example of the surface 805 that can be contacted by a user or an object external to the power tool 100, 400. The surface 805 may be composed of a conductive material such as aluminum. In the example of FIG. 10, the surface 805 is curved to match a shape of and interface with the primary handle 438 or the secondary handle 468 of the power tool 400.

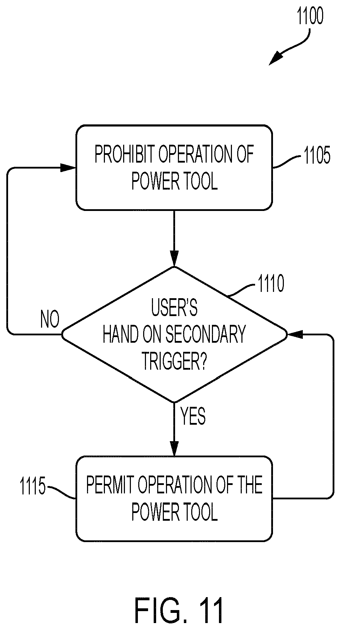

With reference to the power tool 400, in some instances, the secondary switch 502 operates as a safety mechanism of the power tool 400. For example, the controller 700 may prohibit operation of the motor 418 unless the secondary switch 502 is actuated. FIG. 11 provides a method 1100 for allowing use of the power tool 100, 400. While described as being performed by the controller 700, the method 1100 may be performed by the controller 300. At block 1105, the controller 700 prohibits operation of the motor 418. For example, when the power tool 400 is not held by a user, the controller 700 defaults to prohibiting operation of the power tool 400. When operation of the power tool 400 is prohibited, the controller 700, for example, ignores any signals from the primary trigger 442.

At block 1110, the controller 700 determines whether a user's hand is on the secondary switch 502. For example, the controller 700 determines whether a signal from the touch sensor indicates whether a user's hand is on the secondary switch 502. When a user's hand is not on the secondary switch 502 ("NO" at block 1110), the controller 700 returns to block 1105 and continues to prohibit operation of the power tool 400. For example, a user may grab the gripping portion 444 of the primary handle 438, but does not grab the secondary handle 468. As the secondary handle 468 is not gripped, the controller 700 can ignore any actuation of the primary trigger 442. When a user's hand is on the secondary switch 502 ("YES" at block 1110), the controller 700 proceeds to block 1115 and permits operation of the power tool 400.

In some implementations, the controller 700 only permits operation of the power tool 400 when the secondary switch 502 is actuated before the primary trigger 442. For example, if the primary trigger 442 is actuated first, and the secondary switch 502 is actuated subsequent to the primary trigger 442, the controller 700 continues to prohibit operation of the power tool 400.

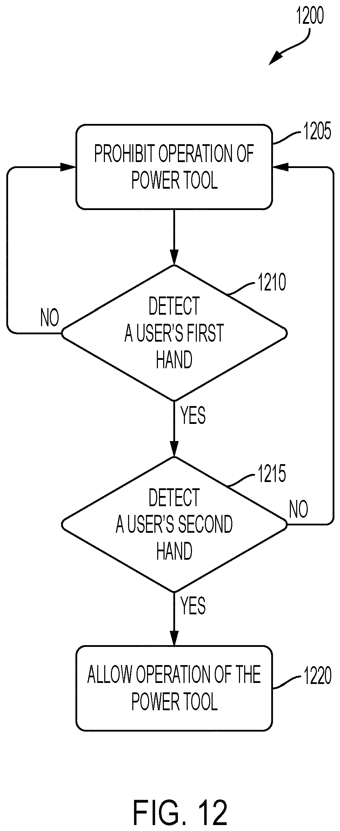

FIG. 12 illustrates a method 1200 for allowing use of the power tool 100, 400. While described as being performed by the controller 300, the method 1200 may be performed by the controller 700.

When a user indicates an intention to use the power tool 100, the power tool 100 is configured to detect, for example, a pick-up of the power tool 100 (e.g., by the controller 300 using an acceleration sensor), but the power tool 100 is prohibited from operating (at block 1205). The method 1200 then includes the controller 300 being configured to determine if the user's first hand is detected on the first handle 110 (at block 1210). In some embodiments, the detection of the user's first hand is detected using the first sensor 140, such as the impedance sensor 800. In other embodiments, determining if the user's first hand is detected is based on an actuation of the input device 150. If the first hand is not detected on the first handle 110, the user is prohibited from using the power tool 100. If the user's first hand is detected, the method 1200 then includes the controller 300 being configured to determine if the user's second hand is detected on the second handle 115 (at block 1215). In some embodiments, the detection of the user's second hand is detected using the second sensor 145, such as the impedance sensor 800.

If the second hand is not detected on the second handle 115, the user is prohibited from using the power tool 100. If the user's second hand is detected on the second handle 115, the controller 300 is configured to allow operation of the power tool 100 (at block 1220). In some embodiments, only one of the user's hands needs to be detected for the power tool 100 to be allowed to operate (e.g., only detecting a user's hand with one of the sensors 140, 145). In some embodiments, a particular sequence of detections are used by the controller 300 to allow operation of the power tool 100. For example, the first handle 110 must be gripped first (as detected by the first sensor 140) and then the second handle 115 must be gripped (as detected by the second sensor 145). In some embodiments, the second handle 115 must be gripped first (as detected by the second sensor 145) and then the first handle 110 must be gripped (as detected by the first sensor 140). In some embodiments, the first sensor 140 and second sensor 145 must detect both user hands within a predetermined amount of time of the first of the sensors detecting a user's hand.

In some implementations, the method 1200 is also performed by the controller 700 for controller the power tool 400. The controller 700 may only permit operation of the power tool 400 when the secondary switch 502 is actuated before the primary trigger 442. For example, if the primary trigger 442 is actuated first, and the secondary switch 502 is actuated subsequent to the primary trigger 442, the controller 700 continues to prohibit operation of the power tool 400.

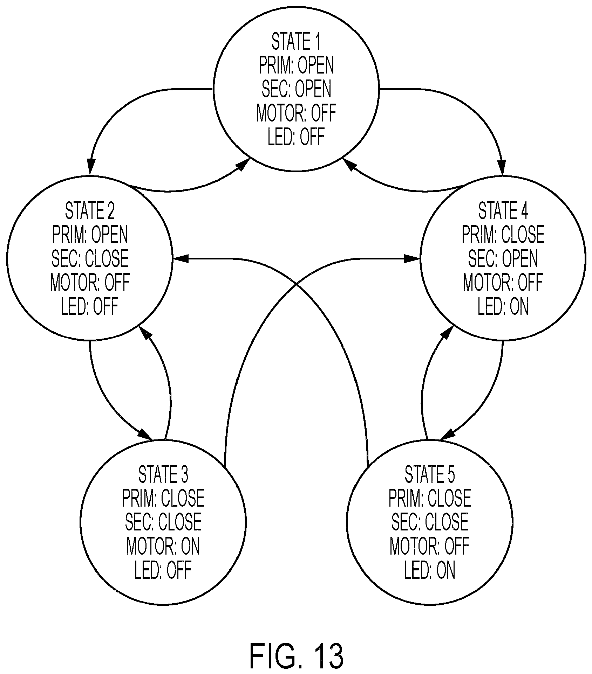

FIG. 13 illustrates a state diagram of the various states of the power tool 400 based on actuation of the primary trigger 442 and the secondary switch 502. In the example of FIG. 13, the indicators 760 include one or more light emitting diodes (LEDs). In state 1, both the primary trigger 442 and the secondary switch 502 are open (e.g., de-actuated). For example, a user does not grip either the primary handle 438 or the secondary handle 468. Accordingly, the motor 418 is off and the indicators 760 are off. If a user grabs the secondary handle 468, the secondary switch 502 becomes closed (e.g., actuated) and the power tool 400 transitions to state 2. In state 2, the primary trigger 442 remains open and the secondary switch 502 is closed. Accordingly, in state 2, the motor 418 remains off and the indicators 760 remain off. From state 2, if a user grabs the primary handle 438 and the primary trigger 442 becomes closed, the power tool 400 transitions to state 3. In state 3, the both the primary trigger 442 and the secondary switch 502 are closed. Additionally, in state 3, the motor 418 is on and driven by the controller 700. The indicators 760 remain off.

While in state 3, should the primary trigger 442 be released while the secondary switch 502 remains actuated, the power tool 400 returns to state 2. However, should the secondary switch 502 be released while the primary trigger 442 remains actuated, the power tool 400 transitions to state 4. In state 4, the primary trigger 442 is closed and the secondary switch 502 is open. Additionally, in state 4, the motor 418 is off and the indicators 760 are on. For example, the indicators 760 may indicate that, although the primary trigger 442 is closed, operation of the motor 418 is prohibited. In some embodiments, the indicators 760 may be an LED that is on or blinking to indicated that operation of the motor 418 is prohibited.

While in state 4, should the secondary switch 502 be closed while the primary trigger 442 remained closed, the power tool 400 proceeds to state 5. In state 5, both the primary trigger 442 and the secondary switch 502 are closed. Additionally, in state 5, the motor 418 is off and the indicators 760 are on. Accordingly, once the secondary switch 502 is released, operation of the motor 418 remains prohibited until the primary trigger 442 is released. While in state 5, should the primary trigger 442 be released, the power tool 400 returns to state 2. Should both the primary trigger 442 and the secondary switch 502 be released at any time during operation, the power tool 400 returns to state 1.

In some instances, the power tool 400 includes a wake sequence that is automatically enabled upon wake up to suspend the typical sequence of activation (such as that described in method 1100). For example, if no hand is detected (at either the primary trigger 442 or the secondary switch 502) within a predetermined time period (for example, 3-4 ms), the power tool 400 may become disabled and stop monitoring operations.

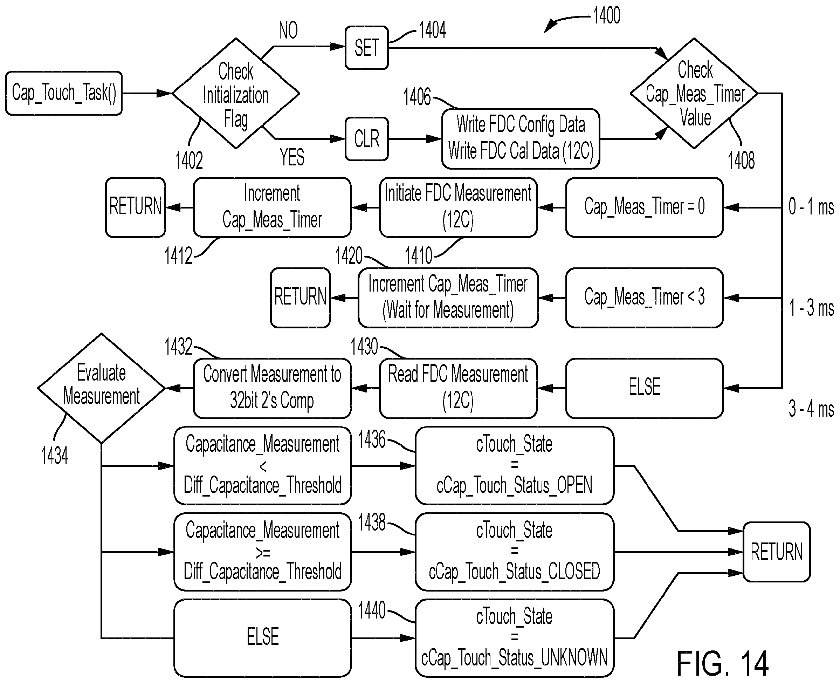

FIG. 14 illustrates a method 1400 for a wake sequence of the power tool 400. The method 1400 may be performed by the controller 700. When the power tool 400 wakes up from a sleep mode, at block 1402 the controller 700 checks whether an initialization flag is set. If the initialization flag is not set, the controller 700 proceeds to block 1404 and sets the initialization flag. If the initialization flag is set, the controller 700 proceeds to block 1406 and writes capacitance (FDC) configuration and capacitance calculation data to memory 725.

At block 1408, the controller 700 checks a capacitance timer value. When the capacitance timer value is equal to zero, the controller 700 proceeds to block 1410. When the capacitance value is greater than zero and less than a threshold (e.g., three milliseconds), the controller 700 proceeds to block 1420. Otherwise, the controller 700 proceeds to block 1430. Beginning with when the capacitance timer value is equal to zero, at block 1410, the controller 700 initiates a capacitance measurement. At block 1412, the controller 700 increments the capacitance timer value and returns to block 1402. When the capacitance value is greater than zero and less than the threshold, at block 1420, the controller 700 increments the capacitance timer value and returns to block 1402 (e.g., waiting for a measurement).

When the capacitance timer value is greater than the threshold, at block 1430, the controller 700 reads the FDC measurement value. At block 1432, the controller 700 converts the capacitance measurement value to, for example, a 32 bit value. At block 1434, the controller 700 compares the capacitance measurement to a capacitance threshold. When the capacitance measurement is less than the capacitance threshold, the controller 700 proceeds to block 1436 and determines the secondary switch 502 is open (e.g., not actuated, the secondary handle 468 is not held). When the capacitance measurement is greater than or equal to the capacitance threshold, the controller 700 proceeds to block 1438 and determines the secondary switch 502 is closed (e.g., actuated, the secondary handle 468 is held). Otherwise, the controller 700 proceeds to block 1440 and determines the state of the secondary switch 502 is unknown. Regardless of the comparison result, the controller 700 returns to block 1402. In some embodiments, the controller 700 prohibits or permits operation of the motor 418 based on the comparison of the capacitance measurement to the capacitance threshold. In some embodiments, the power tool 400 is permitted to control activation of the motor 418 based on actuation of the primary trigger 442 without receiving a signal from the secondary switch 502. In such embodiments, the power tool 400 and controller 700 enter a wake mode from a sleep mode without the secondary switch 502 being activated (e.g., based on another sensor signal where the secondary switch 502 is not a wake-up source). This functions as a disablement or temporary disablement of a requirement that the secondary switch 502 be activated as described above.

Thus, embodiments provided herein describe, among other things, systems and methods for power tools having touch sensors. Various features and advantages are set forth in the following claims.

## Claims

1. A power tool (100, 400) comprising:
a housing (105, 414);
a motor (200, 305, 418) located within the housing (105, 414);
a first handle (110) having a user input (150) configured to be actuated by a first hand of a user;
a second handle (115) having a touch sensor (145) configured to detect a second hand of the user on the second handle (115); and
a controller (300, 700) connected to the motor (200, 305, 418), the user input (150) and the touch sensor (145), the controller (300, 700) configured to:
determine whether the user input (150) is actuated,
determine whether the second hand of the user is on the second handle (115) based on the touch sensor (145),
control, in response to both the user input (150) being actuated and the second hand of the user being on the second handle (115), the motor (200, 305, 418) to drive the motor (200, 305, 418),
prohibit, in response to the user input (150) being actuated and the second hand of the user not being on the second handle (115), operation of the motor (200, 305, 418),
and **characterised in that** the controller is further configured to:
determine whether the user input (150) is actuated after determining whether the second hand of the user is on the second handle (115), and
prohibit, in response to the user input (150) being actuated before the second hand of the user is on the second handle (115), operation of the motor (200, 305, 418).

2. The power tool of claim 1, wherein the touch sensor (145) is an impedance sensor (800) including:
a surface (805); and
a transmitter (810) configured to provide a load sine wave to the surface; and
a receiver (815) configured to receive a current response of the load sine wave.

3. The power tool of claim 2, wherein the controller (300, 700) is configured to determine whether the second hand of the user is on the second handle (115) based on a change in the current response of the load sine wave.

4. The power tool of claim 2 or 3, wherein the surface (805) is curved to interface with the second handle (115).

5. The power tool of any preceding claim, wherein the touch sensor (145) is a capacitive sensor.

6. The power tool of any preceding claim, further comprising:
an indicator (330, 760) configured to convey a status of the power tool (100, 400).

7. The power tool of any preceding claim, wherein the controller (300, 700) is further configured to:
enter, in response to the user input (150) not being actuated and the second hand of the user not being on the second handle (115), a sleep mode.

8. The power tool of any preceding claim, wherein a first portion of the housing (105, 414) is composed of a metallic material and the first portion is configured as a heat sink.

9. A method for controlling a power tool, the method comprising:
determining, with a controller (300, 700), whether a user input (150) is actuated, the user input associated with a first handle (110);
determining, with the controller (300, 700) and based on a signal from a touch sensor (145) integrated in a second handle (115), whether a hand of a user is on the second handle (115);
controlling, with the controller (300, 700) and in response to both the user input being actuated and the hand of the user being on the second handle (115), a motor (200, 305, 418) to drive the motor (200, 305, 418);
prohibiting, with the controller (300, 700) and in response to the user input (150) being actuated and the hand of the user not being on the second handle (115), operation of the motor (200, 305, 418);
**characterised by**:
determining, with the controller (300, 700), whether the user input (150) is actuated after determining whether the hand of the user is on the second handle (115); and
prohibiting, with the controller (300, 700) and in response to the user input (150) being actuated before the hand of the user is on the second handle (115), operation of the motor (200, 305, 418).

10. The method of claim 9, further comprising:
providing, with a transmitter (810) of the touch sensor (145), a load sine wave to a metal plate; and
receiving, with a receiver (815) of the touch sensor (145), a current response of the load sine wave.

11. The method of claim 10, further comprising:
determining, with the controller (300, 700), whether the hand of the user is on the second handle (115) based on a change in the current response of the load sine wave.

12. The method of any of claims 9-11, further comprising:
conveying, by an indicator (330, 760), a status of the power tool (100, 400).

13. The method of any of claims 9-12, further comprising:
entering, with the controller (300, 700) and in response to the user input (150) not being actuated and the hand of the user not being on the second handle (115), a sleep mode.

## Patentansprüche

1. Elektrowerkzeug (100, 400), umfassend:
Ein Gehäuse (105, 414);
einen Motor (200, 305, 418), der sich im Gehäuse (105, 414) befindet;
einen ersten Griff (110) mit einer Benutzereingabe (150), die so konfiguriert ist, dass sie sich mit einer ersten Hand eines Benutzers betätigen lässt;
einen zweiten Griff (115) mit einem Berührungssensor (145), der so konfiguriert ist, dass er eine zweite Hand des Benutzers am zweiten Griff (115) detektiert; und
einen Controller (300, 700), der mit dem Motor (200, 305, 418), der Benutzereingabe (150) und dem Berührungssensor (145) verbunden ist, wobei der Controller (300, 700) konfiguriert ist, Folgendes zu tun:
Ermitteln, ob die Benutzereingabe (150) betätigt ist,
Ermitteln, beruhend auf dem Berührungssensor (145), ob die zweite Hand des Benutzers auf dem zweiten Griff (115) befindet,
Steuern, als Reaktion darauf, dass sowohl die Benutzereingabe (150) betätigt wird als auch die zweite Hand des Benutzers sich am zweiten Griff befindet, des Motors (200, 305, 418), um den Motor (200, 305,418) zu treiben,
Verhindern, als Reaktion darauf, dass die Benutzereingabe (150) betätigt wird und sich die zweite Hand des Benutzers nicht auf dem zweiten Griff (115) befindet, des Betriebs des Motors (200, 305, 418),
und **dadurch gekennzeichnet, dass** der Controller weiter konfiguriert ist, Folgendes zu tun:
Ermitteln, ob die Benutzereingabe (150) betätigt ist, nach der Ermittlung, ob sich die zweite Hand des Benutzers auf dem zweiten Griff (115) befindet, und
Verhindern, als Reaktion darauf, dass die Benutzereingabe (150) betätigt wird, bevor sich die zweite Hand des Benutzers auf dem zweiten Griff (115) befindet, des Betriebs des Motors (200, 305, 418).

2. Elektrowerkzeug nach Anspruch 1, wobei der Berührungssensor (145) einen Impedanz-Sensor (800) ist, der umfasst:
Eine Oberfläche (805); und
einen Sender (810), der so konfiguriert ist, dass er eine Lastsinuswelle an die Oberfläche bereitstellt; und
einen Empfänger (815), der so konfiguriert ist, dass er eine Stromreaktion der Lastsinuswelle empfängt.

3. Elektrowerkzeug nach Anspruch 2, wobei der Controller (300, 700) konfiguriert ist, auf Basis einer Änderung in der Stromreaktion der Lastsinuswelle, zu ermitteln, ob sich die zweite Hand des Benutzers auf dem zweiten Griff (115) befindet.

4. Elektrowerkzeug nach Anspruch 2 oder 3, wobei die Oberfläche (805) gekrümmt ist, um eine Schnittstelle mit dem zweiten Griff (115) zu bilden.

5. Elektrowerkzeug nach irgendeinem vorhergehenden Anspruch, wobei der Berührungssensor (145) ein kapazitiver Sensor ist.

6. Elektrowerkzeug nach irgendeinem, vorhergehenden Anspruch, weiter umfassend:
Eine Anzeige (330, 760), die konfiguriert ist, einen Status des Elektrowerkzeugs (100, 400) anzuzeigen.

7. Elektrowerkzeug nach irgendeinem vorhergehenden Anspruch, wobei der Controller (300, 700) weiter konfiguriert ist, Folgendes zu tun:
Eingeben, als Reaktion darauf, dass die Benutzereingabe (150) nicht betätigt ist und sich die zweite Hand des Benutzers nicht auf dem zweiten Griff (115) befindet, eines Schlafmodus.

8. Elektrowerkzeug nach irgendeinem vorhergehenden Anspruch, wobei ein erster Abschnitt des Gehäuses (105, 414) aus einem Metallmaterial besteht und der erste Abschnitt als eine Wärmesenke konfiguriert ist.

9. Verfahren zur Steuerung eines Elektrowerkzeugs, wobei das Verfahren umfasst:
Ermitteln, mit einem Controller (300, 700), ob eine Benutzereingabe (150) betätigt ist, wobei die Benutzereingabe mit einem ersten Griff (110) verknüpft ist;
Ermitteln, mit dem Controller (300, 700) und auf Basis eines Signals vom Berührungssensor (145), der in einen zweiten Griff (115) integriert ist, ob sich eine Hand eines Benutzers auf dem zweiten Griff (115) befindet;
Steuern, mit dem Controller (300, 700) und als Reaktion darauf, dass sowohl die Benutzereingabe betätigt ist, als auch sich die Hand des Benutzers auf dem zweiten Griff (115) befindet, eines Motors (200, 305, 418), um den Motor (200, 305, 418) anzutreiben;
Verhindern mit dem Controller (300, 700) und als Reaktion darauf, dass die Benutzereingabe (150) betätigt wird und sich die Hand des Benutzers auf dem zweiten Griff (115) befindet, des Betriebs des Motors (200, 305, 418);
**gekennzeichnet durch**:
Ermitteln, mit dem Controller (300, 700), ob die Benutzereingabe (150) betätigt ist, nach der Ermittlung, ob sich die Hand des Benutzers auf dem zweiten Griff (115) befindet; und
Verhindern mit dem Controller (300, 700) und als Reaktion darauf, dass die Benutzereingabe (150) betätigt wird und sich die Hand des Benutzers auf dem zweiten Griff (115) befindet, des Betriebs des Motors (200, 305, 418).

10. Verfahren nach Anspruch 9, weiter umfassend:
Bereitstellen, mit einem Sender (810) des Berührungssensors (145), einer Lastsinuswelle an eine Metallplatte; und
Empfangen, mit einem Empfänger (815) des Berührungssensors (145), einer Stromreaktion der Lastsinuswelle.

11. Verfahren nach Anspruch 10, weiter umfassend:
Ermitteln, mit dem Controller (300, 700), ob sich die Hand des Benutzers auf dem zweiten Griff (115) befindet, auf Basis einer Änderung in der Stromreaktion der Lastsinuswelle.

12. Verfahren nach irgendeinem der Ansprüche 9-11, weiter umfassend:
Übermitteln, durch eine Anzeige (330, 760), eines Status des Elektrowerkzeugs (100, 400).

13. Verfahren nach irgendeinem der Ansprüche 9-12, weiter umfassend:
Eingeben, mit dem Controller (300, 700) und als Reaktion darauf, dass die Benutzereingabe (150) nicht betätigt wird und sich die Hand des Benutzers nicht auf dem zweiten Griff (115) befindet, eines Schlafmodus.

## Revendications

1. Un outil électrique (100, 400) comprenant :
un boîtier (105, 414) ;
un moteur (200, 305, 418) situé à l'intérieur du boîtier (105, 414) ;
une première poignée (110) ayant une entrée utilisateur (150) configurée pour être actionnée par une première main d'un utilisateur ;
une deuxième poignée (115) ayant un capteur tactile (145) configuré pour détecter une deuxième main de l'utilisateur sur la deuxième poignée (115) ; et
un contrôleur (300, 700) connecté au moteur (200, 305, 418), l'entrée utilisateur (150) et le capteur tactile (145), le contrôleur (300, 700) étant configuré pour :
déterminer si l'entrée utilisateur (150) est actionnée,
déterminer si la deuxième main de l'utilisateur est sur la deuxième poignée (115) d'après le capteur tactile (145),
commander, en réponse à l'actionnement de l'entrée utilisateur (150) ainsi qu'à la présence de la deuxième main de l'utilisateur sur la deuxième poignée (115), le moteur (200, 305, 418) pour entraîner le moteur (200, 305,418),
interdire, en réponse à l'actionnement de l'entrée utilisateur (150) et l'absence de la deuxième main de l'utilisateur sur la deuxième poignée (115), le fonctionnement du moteur (200, 305, 418),
et **caractérisé par le fait que** le contrôleur est configuré en sus pour :
déterminer si l'entrée utilisateur (150) est actionnée après avoir déterminé si la deuxième main de l'utilisateur est sur la deuxième poignée (115), et
interdire, en réponse à l'actionnement de l'entrée utilisateur (150) avant l'arrivée de la main de l'utilisateur sur la deuxième poignée (115), le fonctionnement du moteur (200, 305, 418).

2. L'outil électrique de la revendication 1, dans lequel le capteur tactile (145) est un capteur d'impédance (800) comprenant :
une surface (805) ; et
un émetteur (810) configuré pour fournir une onde sinusoïdale de charge à la surface ; et
un récepteur (815) configuré pour recevoir une réponse en courant de l'onde sinusoïdale de charge.

3. L'outil électrique de la revendication 2, dans lequel le contrôleur (300, 700) est configuré pour déterminer si la deuxième main de l'utilisateur est sur la deuxième poignée (115) d'après un changement de la réponse en courant de l'onde sinusoïdale de charge.

4. L'outil électrique des revendications 2 ou 3, dans lequel la surface (805) est incurvée pour s'interfacer avec la deuxième poignée (115).

5. L'outil électrique d'une quelconque revendication précédente, dans lequel le capteur tactile (145) est un capteur capacitif.

6. L'outil électrique d'une quelconque revendication précédente, comprenant en sus :
un indicateur (330, 760) configuré pour communiquer un état de l'outil électrique (100, 400).

7. L'outil électrique d'une quelconque revendication précédente, dans lequel le contrôleur (300, 700) est configuré en sus pour :
entrer, en réponse au fait que l'entrée utilisateur (150) n'est pas actionnée et que la deuxième main de l'utilisateur n'est pas sur la deuxième poignée (115), dans un mode veille.

8. L'outil électrique d'une quelconque revendication précédente, dans lequel une première partie du boîtier (105, 414) est composée d'un matériau métallique et la première partie est configurée comme un dissipateur thermique.

9. Un procédé de commande d'un outil électrique, le procédé comprenant les étapes consistant à :
déterminer, avec un contrôleur, si l'entrée utilisateur (150) est actionnée, l'entrée utilisateur étant associée à une première poignée (110) ;
déterminer, avec le contrôleur (300, 700) et d'après un signal venant d'un capteur tactile (145) intégré à une deuxième poignée (115), si une main de l'utilisateur est sur la deuxième poignée (115) ;
commander, avec le contrôleur (300, 700) et en réponse à l'actionnement de l'entrée utilisateur (150) ainsi qu'à la présence de la main de l'utilisateur sur la deuxième poignée (115), un moteur (200, 305, 418) pour entraîner le moteur (200, 305, 418) ;
interdire, avec le contrôleur (300, 700) et en réponse à l'actionnement de l'entrée utilisateur (150) et l'absence de la main de l'utilisateur sur la deuxième poignée (115), le fonctionnement du moteur (200, 305,418) ;
**caractérisé par** le fait de :
déterminer, avec le contrôleur (300, 700), si l'entrée utilisateur (150) est actionnée après avoir déterminé si la main de l'utilisateur est sur la deuxième poignée (115) ; et
interdire, avec le contrôleur (300, 700) et en réponse à l'actionnement de l'entrée utilisateur (150) avant l'arrivée de la main de l'utilisateur sur la deuxième poignée (115), le fonctionnement du moteur (200, 305, 418)

10. Le procédé de la revendication 9, comprenant en sus :
fournir, avec un émetteur (810) du capteur tactile (145), une onde sinusoïdale de charge à une plaque de métal ; et
recevoir, avec un récepteur (815) du capteur tactile (145), une réponse en courant de l'onde sinusoïdale de charge.

11. Le procédé de la revendication 10, comprenant en sus :
déterminer, avec le contrôleur (300, 700), si la main de l'utilisateur est sur la deuxième poignée (115) d'après un changement de la réponse en courant de l'onde sinusoïdale de charge.

12. Le procédé d'une quelconque des revendications 9 à 11, comprenant en sus :
communiquer, par un indicateur (330, 760), un état de l'outil électrique (100, 400).

13. Le procédé d'une quelconque des revendications 9 à 12, comprenant en sus :
entrer, avec le contrôleur (300, 700) et en réponse au fait que l'entrée utilisateur (150) n'est pas actionnée et que la main de l'utilisateur n'est pas sur la deuxième poignée (115), dans un mode de veille.
